(19) **Europäisches Patentamt**

**European Patent Office**

**Office européen des brevets**

(11) **EP 1 051 596 B1**

(12) **EUROPEAN PATENT SPECIFICATION**

(45) Date of publication and mention
of the grant of the patent:
**27.03.2002 Bulletin 2002/13**

(21) Application number: **99950983.9**

(22) Date of filing: **25.10.1999**

(51) Int Cl.$^7$: **G01B 21/04**

(86) International application number:
**PCT/GB99/03531**

(87) International publication number:
**WO 00/25087 (04.05.2000 Gazette 2000/18)**

(54) **CALIBRATIONS AND ERROR MAPPINGS OF AN ANALOGUE PROBE**

EICHUNGEN UND FEHLERKARTIERUNGEN EINES ANALOGEN TASTERS

ETALONNAGES ET MISES EN CORRESPONDANCE D'ERREURS D'UNE SONDE ANALOGIQUE

(84) Designated Contracting States:
**AT BE CH CY DE DK ES FI FR GB GR IE IT LI LU MC NL PT SE**

(30) Priority: **24.10.1998 GB 9823228**

(43) Date of publication of application:
**15.11.2000 Bulletin 2000/46**

(73) Proprietor: **Renishaw plc**
**Wotton-Under-Edge**
**Gloucestershire GL12 8JR (GB)**

(72) Inventors:
• **SUTHERLAND, Alexander, Tennant**
  **Edinburgh EH13 0NA (GB)**

• **WRIGHT, David, Allan**
  **Edinburgh EH13 0DL (GB)**

(74) Representative: **Waite, John et al**
**Renishaw plc**
**Patent Department**
**New Mills**
**Wotton-under-Edge**
**Gloucestershire GL12 8JR (GB)**

(56) References cited:
EP-A- 0 389 108    EP-A- 0 599 513
DE-C- 4 439 578    US-A- 4 875 177

**Description**

The present invention relates to methods of calibrating analogue and error mapping probes. The methods have particular reference to the calibration of analogue probes which have a stylus for contacting a workpiece, and which is mounted on a mechanical suspension, for example a spring suspension.

Analogue probes of this type are well known and an example of such a probe is described in our UK Patent No. 1,551,218. This patent describes a probe suspension mechanism which comprises three orthogonally arranged pairs of parallel springs connected in series between a fixed point on the probe housing and a movable member to which a workpiece contacting stylus is connected.

During a measuring operation on a workpiece using such a probe, a machine on which the probe is mounted is driven towards the workpiece to bring the stylus into contact with the workpiece surface at various points on the surface.

When the stylus contacts the workpiece the stylus will be deflected as the machine continues to move, and measuring transducers within the probe generate outputs representing deflections of the probe stylus along three orthogonal axes. These axes are referred to as the a,b and c axes of the probe.

Ideally it would be arranged that the a,b, and c axes of the probe are aligned with the X,Y and Z coordinate axes of the machine when the probe is mounted on the machine, so that the measured deflections of the probe stylus will take place along the X,Y and Z axes of the machine. However, such alignment is not always possible to achieve.

Also, if there is any mis-alignment between the three probe a,b and c axes, such that they are not orthogonal, then deflection of the stylus, for example, nominally in the a, direction can give rise to deflections in the b and c directions also.

Additionally, the scaling factors of the three probe axes, will, in general, deviate from their nominal values.

Therefore, it is usual to calibrate the probe and machine system to determine the effects of any such mis-alignments and scaling errors, and thereafter to correct any measurements made on a workpiece for these effects.

One method of performing the calibration is to mount a calibration artefact (usually a reference sphere of known diameter) on the machine, and to drive the probe towards the artefact, for example, along one of the machine axes, until an increase in the output of the measuring devices of the probe above a pre-determined threshold level indicates that contact with the surface of the artefact has been made. After stylus contact has been confirmed, a set of machine X,Y,Z and probe a,b, c coordinate data are taken. Machine movement continues until the machine has moved a selected distance beyond the confirmed contact point, and a further set of X,Y,Z, and a,b,c coordinate data are taken.

The changes in the a,b,c outputs of the probe's measuring transducers in the three axes are recorded and correlated with the changes in the readings of the machine's measurement devices along each of the three machine axes. This procedure is repeated for two other orthogonal directions, which may be the other two machine axes, and from the sets of readings a probe transformation matrix can be established which relates the probe outputs in the a,b and c axes to the machine's X, and Z coordinate system. This involves solving the nine simultaneous equations relating the a,b, and c axis data to each of the X,Y, and Z axes. This process may be repeated for one or more further deflections but normally only relatively few data points are taken.

Once the transformation matrix has been established the relevant machine axis components of the probe deflections can be obtained by multiplying the relevant probe output by the relevant matrix term.

The key assumption in this calibration is that the machine movement mirrors the probe tip movement. However, this assumption becomes invalid when the stylus slips on the surface of the sphere.

There are two factors which can cause the stylus to slip on the sphere surface;

> I) the machine may not go down the commanded direction accurately enough to prevent slippage,
> ii) the probe force and deflection vectors may not coincide closely enough to prevent slippage.

In accordance with a first novel aspect of the present invention there are provided methods according to claim 1 of calibrating an analogue probe which are relatively immune to errors caused by slippage of a stylus on the surface of the calibration artefact. The methods therefore allow a more accurate probe transformation matrix to be produced.

The above procedure may be carried out in multiple directions (i.e. more than the minimum of three) which facilitates the calculation of a matrix which is more accurate at directions away from the machine axis.

In accordance with another novel aspect of the present invention there are provided methods according to claim 2 of error mapping the deflections of an analogue scanning probe.

The methods of the invention will now be more particularly described with reference to the accompanying drawings in which:

> Fig 1 illustrates a scanning probe with its stylus in contact with a reference artefact,
> Fig 2 shows a plot of probe deflections versus machine movement in one of the X Y Z axes of the machine,

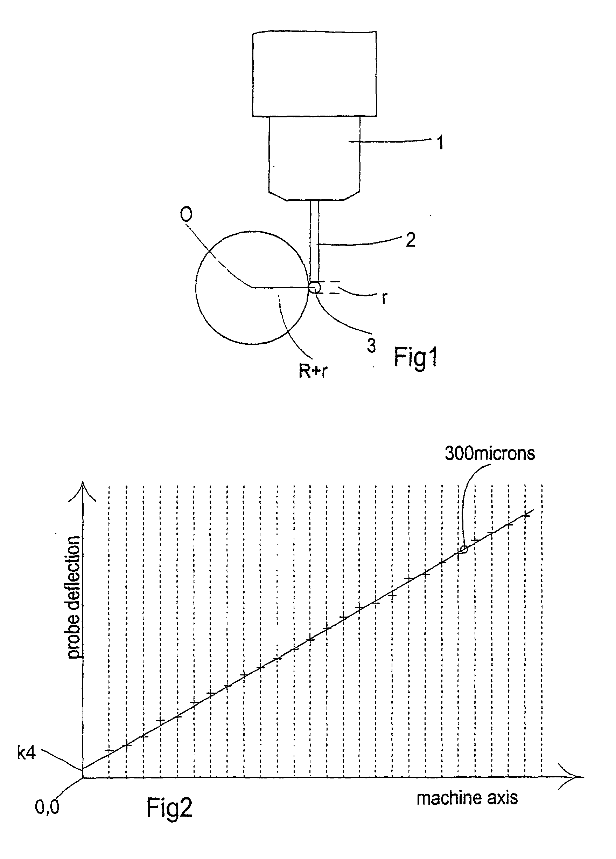

Referring now to Figs 1 and 2, there is shown an analogue probe 1 mounted on a machine quill (not shown) and which has a stylus 2 with a stylus ball 3 at its free end. The stylus is shown in contact with a reference sphere of known radius R and having its centre O at position X1,Y1,Z1 in the machine axis coordinates. The stylus ball has a radius r which is to be determined, along with the position of the centre of the sphere and the probe transformation matrix.

As a first step in the calibration method the probe must be "zeroed" in its free condition. This simply involves taking readings from the probe measurement transducers when no contact force is acting on the stylus and setting these to zero in all three axes, or alternatively storing these readings so that they can be subtracted from all subsequent readings.

The next step is to make an estimate of the position of the centre of the sphere, by taking measurements of points at four positions around the surface of the sphere from which the position of the centre can be calculated in known manner, and using a relevant default probe transformation matrix as a starting point. This step is needed because the calibration method requires the sphere to be contacted at least at 9 points, but up to as many as may be required with a reasonable distribution over its surface, taking account of obstructions, and it is important that the machine should be driven so the probe will contact the surface at approximately the right positions on the surface of the sphere. However, it is not important that the position of the centre of the sphere is known accurately at this stage.

The calibration method requires that for each of the plurality of points of the calibration algorithm, the probe stylus is driven by the machine into contact with the sphere in a direction which is nominally normal to the sphere surface. After the stylus ball has contacted the surface of the sphere, the machine continues to drive the probe in the same direction until the deflection of the stylus exceeds the required calibration deflection. The magnitude of this deflection is determined by the deflections which will occur in practice when the probe is being used to measure a workpiece.

Once the required deflection of the stylus has been achieved the machine is stopped and reversed along its approach path, and readings are taken simultaneously at regular intervals, of the outputs of the measuring devices of the machine and of the measuring transducers in the probe, to provide the a,b and c outputs of the probe synchronised with the X,Y and Z coordinates of the machine position. This process continues until the probe stylus leaves the surface and for a small distance thereafter to take account of noise and time logs in the probe outputs.

This data may now be used to calculate the X, Y, and Z axis positions of the machine at zero probe deflection for each of the points on the sphere, for example, by fitting the data for each point to an equation of the form;

$$x = k_1.a + k_2.b + k_3.c + k_4$$

and then extrapolating to zero, i.e. $x = k_4$.

Because the reference sphere and the stylus ball are both specified as being accurately spherical, it follows that all of these extrapolated points must be on the surface of a sphere of radius R+r. From the points which have been calculated, the radius R+r and the position of the centre of the sphere can now be calculated more accurately using a standard multi-point sphere fit function, for example the least squares best fit method. Since the radius R of the sphere is known the radius r of the stylus ball can now be determined.

As an alternative to using an "extrapolation to zero" process with its attendant uncertainties, the data obtained as the machine is reversed may be interpolated between two points at a very small stylus deflection.

It is to be noted that this part of the calibration process does not require the use of a probe transformation matrix since the probe deflection is zero or very small. Therefore probe errors in the calculation are eliminated or rendered insignificant.

A magnitude of probe deflection is now selected, for example, 300 microns, which is representative of the deflections which will be used in subsequent measurements, and from each of the sets of data, a small number of probe and machine readings on either side of the nominal 300 micron deflection position are averaged and interpolated to provide estimated X,Y and Z machine axis coordinates and a,b,c probe outputs at the 300 micron probe deflection point.

A trial probe matrix, for example, the previously used default matrix is applied to these estimated probe outputs at the 300 micron radial deflection. Using this trial probe matrix, the a,b,c probe output values are transformed to X,Y,Z machine components, which may then be added to the X,Y,Z machine distances for the sphere centre. The radius of the sphere R+r is calculated for each of the (at least nine) positions at which calibration data was taken and the radius errors are stored. An optimisation calculation is then carried out for each of the coefficients in the probe matrix, by adjusting them until, for example, the root sum of the squares of the radial errors at the positions is minimised. Software for carrying out this optimisation process is known and available from various mathematical function libraries, and detail is not therefore explained here.

The optimisation process may include three additional coefficients representing the position of the centre of the sphere, in which case at least twelve positions at which calibration data was taken must be used.

The above-described calibration process provides a probe matrix optimised for one radial deflection of the stylus, and, if desired, further calculations can be carried out for other deflections of the probe within the normal measuring range. A basic requirement of the calibration process is the validity of the assumption that the stylus ball remains on the surface of the reference sphere while the data is being gathered at each of the points. It is also important that the acquisition of the measurement data from the measuring devices of the machine giving the X,Y and Z coordinates at each point is adequately synchronised with the data coming from the probe measuring devices which provide the probe axis a,b and c data.

Once the probe has been calibrated and the probe matrices determined, it is then possible to error map the probe using the data already collected using an extension to the above process.

The novel part of the error mapping technique is based on the realisation that as long as the stylus ball remains in contact with the surface of the reference sphere, while data is being collected, it is sufficient to map radial errors only because tangential errors are insignificant for parts with constant or slowly varying radius of curvature. This significantly reduces the number of measurements compared with that which would be required to produce a conventional full error map of the probe's deflections. A further advantage is that the only apparatus needed to perform this procedure is an accurate sphere, and these are commonly available.

In order to produce the error map the previously stored data can be used. The probe outputs in the a, b and c axes are transformed into machine X,Y and Z coordinate positions using the probe matrix generated by the calibration method. The radius from the centre of the sphere to the centre of the stylus tip is calculated. The radius error from the previously calibrated sum of the known sphere and tip radii, is stored against the probe deflection magnitude and the azimuth and elevation angles of the contact point at the 300 micron deflection. Typically the probe deflection magnitude but not direction is then changed and a second radial error calculated and stored against the second deflection magnitude at the same azimuth and elevation angles.

The two probe deflections selected are representative of the highest and lowest probe deflections likely to be encountered during a subsequent measuring operation. However, further data at other probe deflections may be gathered to improve the certainty of data interpolated from the subsequent error map.

The above process is repeated for further relevant directions and a map is compiled of radial errors against azimuth and elevation angles for two deflection magnitudes. Typically this process generates a map in the form of a part spherical shell of probe deflections. The inner and outer radii of the shell would normally bracket all anticipated measuring probe deflection magnitudes and the azimuth and elevation angle ranges will be selected relative to the anticipated practical probe deflection directions. For example, if vertical axis bores only are to be scanned, an elevation angle of 0° would be sufficient.

Various methods may be used for acquiring the data required for the error map. These methods include a series of nominally radial movements of the probe stylus towards the sphere centre at desired positions around the sphere, by scanning around the sphere at several different constant deflections, or with continuously varying deflections, by scanning in one or more planes which may be parallel, orthogonal or angled, or by any combination of these techniques. The map itself may consist of a multidimensional look-up table of radial errors versus deflection magnitude, azimuth and elevation angles, or it may consist of a function with associated polynomial coefficients, or a trigonometrical function.

If the map is in the form of a look-up table then subsequent measurement errors are corrected by interpolating the stored radial error values to acquire the correction to be applied to the stylus tip position at the measured position. Alternatively if the map is a polynomial function the radial error expression is solved for the deflection magnitude and angles at the measured position.

It has been found that friction between the stylus tip and the surface of the sphere can cause additional errors which need to be taken account of in the error map. In practice we have found that friction causes the probe deflection vector to be at some angle from the outward normal from the surface of the sphere. This may be any positive or negative angle up to the maximum angle of friction, depending on the direction of movement of the probe tip relative to the sphere. We have found that the measuring errors increase as the friction coefficient increases, and with the amount of asymmetry in the errors of the probe a,b and c axes. For example, at a radial deflection of 1mm with a friction angle of 8.5° and an asymmetry in the a and b axes of 3% a normal error of 2.5 microns can be present.

The coefficient of friction of the probe tip varies according to the material and condition of the contacted workpiece surface, and will almost certainly differ from that of the calibration/mapping artifact.

Since it is difficult to predict or control the coefficient of friction, in a further novel refinement to the error mapping process, we have found that the current angle of friction can be determined to a first order by comparing the probe deflection vector direction with the measured surface normal direction (this being derived from the actual probe tip locus). Although this value of friction angle is inaccurate because it is derived from the probe outputs the errors of which are being mapped, it is accurate enough to enable a first order improvement in the accuracy of the error map.

In an additional step therefore in the method of creating the error map it is proposed that the reference sphere should be scanned both clockwise and anti-clockwise and the apparent angle of friction determined from the difference in the probe deflection vector and the surface normal direction. Then, in addition to the stored correction value, which is preferably calculated for zero coefficient of friction, the value of the rate of change of correction with friction angle is also stored for each azimuth elevation and radial deflection. Subsequent measurements can then be corrected by an amount found by interpolating the stored correction value and adding it to the interpolated rate of change multiplied by the current coefficient of friction (determined as previously from the probe deflection vector direction and the measured surface normal direction).

We have found that by including this allowance for the angle of friction, the radial measuring errors can be reduced to sub-micron level.

## Claims

1. Methods of calibrating an analogue probe having a stylus with a workpiece-contacting tip of radius (r) comprising the steps of:

   a) mounting the probe and a calibration sphere of known radius (R) on a machine,

   b) causing relative movement between the probe and the sphere from a plurality of directions each of which is nominally normal to the surface of the sphere to bring the stylus tip into contact with said surface and deflect the stylus by a predetermined amount,

   c) reversing the relative movement and recording simultaneous values of the radial deflections of the stylus and of machine axis X,Y and Z positions at intervals at least until the stylus tip leaves the surface,

   d) extrapolating or interpolating each of the recorded sets of readings to obtain values of the machine X,Y and Z axis positions when the stylus radial deflection is zero or close to zero,

   e) calculating from the extrapolated or interpolated machine axis positions the value (R+r) and the position of the centre of the sphere,

   f) at a pre-selected radial deflection of the stylus which is the same for each of the directions noting the a,b and c outputs of the probe, and, using a trial probe transformation matrix converting the probe a,b and c values into incremental X,Y and Z values of machine axis positions,

   g) using the calculated position of the centre of the sphere, determining the radius of the sphere (R+r) as measured in each of the directions,

   h) noting the differences in the radius measurements in each of the directions compared to the radius as determined in step (e) and,

   i) optimising the probe transformation matrix to minimise the differences in the calculated radius values.

2. Methods of error mapping an analogue probe having a stylus with a workpiece-contacting tip of radius (r) comprising the steps of:

   calibrating the probe in accordance with a method as claimed in claim 1,
   using the probe transformation matrix generated by the calibration step, transforming probe a,b and c output data at least at two different radial deflections of the probe for one contact point on the sphere into machine X,Y and Z coordinate positions,
   calculating the radius R+r for each deflection magnitude,
   repeating the calculation for at least two radial deflections at other positions around the sphere,
   comparing the calculated radii from the previously calibrated value and noting the radial errors in each case,
   storing the radial errors against the respective values of deflection and the azimuth and elevation of the contact point to form the error map.

3. Methods of error mapping an analogue probe as claimed in claim 2 and comprising the further steps of:

   determining the angle of friction between the probe tip and the reference sphere,
   correlating the variation in the error values with the variation in friction angle, and
   storing this variation as an additional term in the error map.

## Patentansprüche

1. Verfahren zur Kalibrierung eines Analogtasters, der einen Fühler umfasst, der eine mit einem Werkstück in Kontakt tretende Spitze mit einem Radius (r) aufweist, mit den Schritten, dass:

   (a) der Taster und eine Kalibrierungskugel mit bekanntem Radius (R) an einer Maschine angebracht werden,

   (b) eine relative Bewegung zwischen dem Taster und der Kugel aus einer Vielzahl von Richtungen bewirkt wird, von denen jede nominell normal zu der Oberfläche der Kugel ist, um die Fühlerspitze in Kontakt mit der Oberfläche zu bringen und den Fühler um eine vorbestimmte Größe abzulenken,

(c) die relative Bewegung umgekehrt und simultane Werte der radialen Ablenkungen des Fühlers und X-, Y- und Z-Maschinenachsenpositionen bei Intervallen zumindest solange aufgezeichnet werden, bis die Fühlerspitze die Oberfläche verlässt,

(d) jeder der aufgezeichneten Sätze von Ablesungen extrapoliert oder interpoliert wird, um Werte der X-, Y- und Z- Maschinenachsenpositionen zu erhalten, wenn die radiale Ablenkung des Fühlers Null oder in der Nähe von Null ist,

(e) aus den extrapolierten oder intrapolierten Maschinenachsenpositionen der Wert (R+r) und die Position des Zentrums der Kugel berechnet wird,

(f) bei einer vorgewählten radialen Ablenkung des Fühlers, die für jede der Richtungen gleich ist, die a-, b- und c-Ausgänge des Tasters vermerkt werden, und die a-, b- und c-Werte des Tasters unter Verwendung einer Versuchstastertransformationsmatrix in inkrementale X-, Y- und Z-Werte der Maschinenachsenpositionen transformiert werden,

(g) den Radius der Kugel (R+r) unter Verwendung der berechneten Position des Zentrums der Kugel bestimmt wird, wie in jeder der Richtungen gemessen,

(h) die Unterschiede der Radiusmessungen in jeder der Richtungen im Vergleich zu dem Radius vermerkt werden, wie in Schritt (e) bestimmt wird, und

(i) die Tastertransformationsmatrix optimiert wird, um die Unterschiede in den berechneten Radiuswerten zu minimieren.

**2.** Verfahren zur Fehlerkartierung eines Analogtasters, der einen Fühler umfasst, der eine mit einem Werkstück in Kontakt tretende Spitze mit einem Radius (r) aufweist, mit den Schritten, dass:

der Taster gemäß einem Verfahren nach Anspruch 1 kalibriert wird,
a-, b- und c- Tasterausgangsdaten unter Verwendung der Tastertransformationsmatrix, die durch den Kalibrierungsschritt erzeugt wird, zumindest bei zwei verschiedenen Radialablenkungen des Tasters für einen Kontaktpunkt an der Kugel in X-, Y- und Z-Maschinenkoordinatenpositionen transformiert werden,
der Radius R+r für jede Ablenkungsgröße berechnet wird,
die Berechnung für zumindest zwei radiale Ablenkungen an anderen Positionen um die Kugel herum wiederholt wird,
die berechneten Radien von dem vorher kalibrierten Wert verglichen und die radialen Fehler in jedem Fall vermerkt werden,
die radialen Fehler gegenüber den jeweiligen Werten der Ablenkung und dem Azimut und der Elevation des Kontaktpunktes gespeichert werden, um die Fehlerkarte zu bilden.

**3.** Verfahren zur Fehlerkartierung eines Analogtasters nach Anspruch 2, ferner mit den Schritten, dass:

der Reibungswinkel zwischen der Tasterspitze und der Referenzkugel bestimmt wird,
die Variation in den Fehlerwerten mit der Variation des Reibungswinkels korreliert wird, und diese Variation als ein zusätzlicher Term in der Fehlerkarte gespeichert wird.

## Revendications

**1.** Méthode de calibrage d'un capteur analogique équipé d'un stylet de rayon (r) en son extrémité pour le contact pièce comportant les étapes suivantes:

a) montage du capteur et d'une sphère d'étalonnage de rayon connu (R) sur une machine

b) génération d'un mouvement relatif entre le capteur et la sphère dans plusieurs directions dont chacune est nominalement normale à la surface de la sphère afin de positionner l'extrémité du stylet en contact avec ladite surface et pour défléchir le stylet d'une valeur prédéterminée,

c) inversion du mouvement relatif et enregistrement simultanément des valeurs de la déflection radiale du stylet et des positions machine X,Y et Z à différents intervalles jusqu'à ce que l'extrémité du stylet perde le contact avec la surface,

d) extrapolation ou interpolation de chacun des ensembles enregistrés pour obtenir les valeurs des positions des axes machine X,Y et Z quand la déflection radiale du stylet est zéro ou très voisine de zéro,

e) calcul à partir des positions extrapolées ou interpolées des axes machine de la valeur (R+r) et de la position du centre de la sphère,

f) à une déflection radiale présélectionnée du stylet qui est la même pour chacune des directions noter les sorties a,b et c du capteur, et, utiliser une matrice d'essai de transformation du capteur convertissant les valeurs a,b et c du capteur en valeurs incrémentales X,Y et Z des positions des axes machine,

g) utilisant la position calculée du centre de la sphère, détermination du rayon de la sphère (R+r) comme mesuré dans chacune des directions,

h) noter les différences dans les mesures de rayon dans chacune des directions comparées au rayon déterminé dans l'étape (e) et,

i) optimalisation de la matrice de transformation du capteur pour réduire au minimum les différences dans les valeurs calculées de rayon.

2. Méthode d'obtention de la table de correction d'un capteur analogique équipé d'un stylet de rayon (r) en son extrémité pour le contact pièce comportant les étapes suivantes:

> calibrage du capteur selon une méthode revendiquée dans la revendication 1,
> utilisation de la matrice de transformation du capteur produite par l'étape de calibrage, transformation des données de sortie a,b et c du capteur au moins pour deux déflections radiales différentes du capteur pour un point de contact sur la sphère dans des positions coordonnée machine X,Y et Z,
> calcul du rayon R+r pour chaque valeur de déflection,
> répéter le calcul pour au moins deux déflections radiales à d'autres positions autour de la sphère
> comparer les rayons calculés à la valeur précédemment calibrée et noter les erreurs radiales dans chaque cas,
> enregistrer les erreurs radiales d'après les valeurs respectives de déflection et des azimuts et des élévations du point de contact pour implémenter la table de correction.

3. Méthode d'obtention de la table de correction d'un capteur analogique selon la revendication 2 et comportant les étapes supplémentaires:

> détermination de l'angle du frottement entre l'extrémité du capteur et de la sphère de référence,
> corrélation de la variation des valeurs d'erreur avec la variation de l'angle de frottement, et enregistrement de cette variation comme terme supplémentaire dans la table de correction.

Fig1

Fig2